# EUROPEAN PATENT APPLICATION

(11) **EP 4 465 469 A1**
(43) Date of publication of application: **20.11.2024**
(21) Application number: 23174320.4
(22) Date of filing: 19.05.2023
(51) Int. Cl.: H02J 1/14, F25B 27/00, H02J 3/38

(54) **METHOD FOR OPERATING A MOTOR AT AN OPTIMAL WORKING POINT**

(71) Applicant: Motor Competence Center Holding Flensburg GmbH, 24941 Flensburg (DE)
(72) Inventor: GRIES, Ulrich, 24941 Flensburg (DE); FISCHER, Marc-Andre, 24941 Flensburg (DE); MOELLER, Hendrik, 24941 Flensburg (DE)
(74) Representative: Inspicos P/S

(57) **Abstract**

The present invention relates to a method for determining an optimal working point for a power unit adapted to power a motor directly from a photovoltaic module, wherein the motor is adapted to drive a piston compressor pump, the method comprising the steps of providing associated data for voltage and power for the photovoltaic module in the form of at least one P-V curve comprising a maximum peak power point (V_{MPP}, P_{MPP}) and a maximum output voltage, Voc, being larger that V_{MPP}; incrementally increasing the load applied to the photovoltaic module and monitor, for each incremental load increase, an associated voltage change; repeating step b) until the voltage change, in response to a load increase increment, exceeds a threshold voltage value, and the output voltage of photovoltaic module thereby becomes smaller than V_{MPP}; reducing the load applied to the photovoltaic module and thus arrive at the optimal working point between V_{MPP} and V_{OC}; and applying the optimal working point in the power unit.

## Description

### FIELD OF THE INVENTION

The present inventin relates to a method for determining an optimal working point for a power unit adapted to power a motor. The present invention relates in particular to a method for operating a motor directly from a photovoltaic module, wherein the motor is adapted to drive a piston compressor pump.

### BACKGROUND OF THE INVENTION

Traditional photovoltaic power supply systems typically involve a number of photovoltaic panels electrically coupled in series or parallel, a power distribution device and a battery bank so that excess power from the photovoltaic panels can be stored for later use. The traditional systems are however disadvantageous for various reasons, such as the costs and the massive weight of the battery bank. Moreover, the availability and maintenance of battery banks at remote locations may be challenging.

Thus, there seems to be a need for simpler photovoltaic power supply systems that may be operated, in particular, at remote locations. In particular, there seems to be a need for photovoltaic power supply systems where the battery bank is omitted, and where photovoltaic power supply systems can be operated at or near optimal working points.

It may be seen as an object of embodiments of the present invention to provide a direct drive method and system for motors driving a piston compressor pump in an optimal manner with respect to power.

### DESCRIPTION OF THE INVENTION

The above-mentioned object is complied with by providing, in a first aspect, a method for determining an optimal working point for a power unit adapted to power a motor directly from a photovoltaic module, wherein the motor is adapted to drive a piston compressor pump, the method comprising the steps of
a) providing associated data for voltage and power for the photovoltaic module in the form of at least one P-V curve comprising a maximum peak power point (V_{MPP}, P_{MPP}) and a maximum output voltage, V_{OC}, being larger that V_{MPP},
b) incrementally increasing the load applied to the photovoltaic module and monitor, for each incremental load increase, an associated voltage change,
c) repeating step b) until the voltage change, in response to a load increase increment, exceeds a threshold voltage value, and the output voltage of photovoltaic module thereby becomes smaller than V_{MPP},
d) reducing the load applied to the photovoltaic module and thus arrive at the optimal working point between V_{MPP} and V_{OC}, and
e) applying the optimal working point in the power unit.

Thus, the first aspect of the present invention relates to a method for powering a motor directly from a photovoltaic module. This direct powering of the motor is advantageous in that for example costly battery banks can be completely omitted. It is moreover advantageous that the maximun peak point tracker (MPPT) control scheme facilitates that 1) the motor and the piston compressor pump is, at all times, operated to provide maximum cooling, 2) the number of starts and stops of the motor are significantly reduced whereby unnecessary wear is also reduced, and 3) collapse of the photovoltaic module is avoided.

The method of the present invention ensures that the power unit is operated, at a given P-V curve, at a voltage slightly above the the V_{MPP} voltage, i.e. at a voltage where the photovoltaic module is stable. At this stable working point the photovoltaic module is not overloaded, and the photovoltaic module is able to deliver close to maximum power. The optimal working point may be less than 15%, such as less than 12%, such as less than 10%, such as less than 8%, such as less than 6%, such as less than 5% above the V_{MPP} voltage.

The incremental load increase applied to the photovoltaic module may be provided by increasing the rotational speed of the motor and the piston compressor pump.

The present invention may be used in relation to portable cooling devices for cooling for example pharmaceuticals at remote locations where traditional AC power grids are either unstable/unreliable or simply not available.

In the present context a photovoltaic module is a module that converts light, such as incoming natural sun light (solar irradiance), into electrical power, such as DC power. A photovoltaic module may comprise a single photovoltaic panel or it may comprise a plurality of photovoltaic panels. The number of photovoltaic panels may vary from a single panel to hundreds or even thousands of panels. Each photovoltaic panel typically comprises a plurality of photovoltaic cells.

The motor may be a brushless DC motor/synchronous permanent magnet machine. A converter may be provided for starting and operating the motor. The converter may comprise an inverter comprising a controllable B6 inverter bridge configured to provide a three-phase AC power drive output for driving the motor and the piston compressor pump operatively connected thereto.

As it will be discussed in further details below the available amount of power from a photovoltaic module depends on the amount of incoming natural sun light which typically depends on the position of the sun relative to the photovoltaic module, clouds, dirt on the photovoltaic module etc.

With respect to the load increase increments, the voltage change, in response to a load increase implement, may be a voltage decrease.

The load increase increments of step b) may be essentially equal in size. When the voltage change, in response to a load increase increment, exceeds a threshold voltage value, and the output voltage of photovoltaic module thereby becomes smaller than V_{MPP}, the load applied to the photovoltaic module is reduced so that the optimal working point is slightly above V_{MPP} as already disclosed (between V_{MPP} and V_{OC}).

Again, a photovoltaic module is to be understood as a module that converts light, such as incoming natural sun light, into electrical power, such as DC power. A photovoltaic module may comprise a single photovoltaic panel or it may comprise a plurality of photovoltaic panels. The number of photovoltaic panels may vary from a single panel to hundreds or even thousands of panels. Each photovoltaic panel typically comprises a plurality of photovoltaic cells.

Similar to the first aspect the motor may be a brushless DC motor/synchronous permanent magnet machine. The converter for starting and operating the motor may comprise an inverter comprising a controllable B6 inverter bridge configured to provide a three-phase AC power drive output for driving the motor and the piston compressor pump. The converter may be adapted to adjust the speed of rotation of the motor so that it is essentially proportional to the repeatedly determined available amount of power from the photovoltaic module. Thus, if the repeatedly determined available amount of power decreases a certain percentage the speed of rotation of the motor may be decreased accordingly using the converter.

In a second asepct, the present invention relates to a power unit adapted to power a motor directly from a photovoltaic module, wherein the motor is adapted to drive a piston compressor pump, and wherein the power unit comprises a control unit adapted to
a) receive associated data for voltage and power for the photovoltaic module in the form of at least one P-V curve comprising a maximum peak power point (V_{MPP}, P_{MPP}) and a maximum output voltage, V_{OC}, being larger that V_{MPP},
b) incrementally increasing the load applied to the photovoltaic module and monitor, for each incremental load increase, an associated voltage change,
c) repeating step b) until the voltage change, in response to a load increase increment, exceeds a threshold voltage value, and the output voltage of photovoltaic module thereby becomes smaller than V_{MPP},
d) reducing the load applied to the photovoltaic module and thus arrive at the optimal working point between V_{MPP} and V_{OC}, and
e) applying the optimal working point in the power unit.

Thus, the second aspect of the present invention relates to a power unit for powering a motor directly from a photovoltaic module. As already addressed this direct powering of the motor is advantageous in that for example costly battery banks can be completely omitted. It is moreover advantageous that the MMPT control scheme may adjust the speed of rotation of the motor in accordance with the repeatedly determined available amount of power may 1) reduce the number of starts and stops of the motor significantly whereby unnecessary wear is reduced, and 2) avoid collapse of the photovoltaic module. It is also advantageous that the motor and the piston compressor pump may, at all times, be operated to provide maximum cooling.

The power unit may be used in relation to portable cooling devices for cooling for example pharmaceuticals at remote locations where traditional AC power grids are either unstable/unreliable or simply not available.

Again, a photovoltaic module is to be understood as a module that converts light, such as incoming natural sun light, into electrical power, such as DC power. A photovoltaic module may comprise a single photovoltaic panel or it may comprise a plurality of photovoltaic panels. The number of photovoltaic panels may vary from a single panel to hundreds or even thousands of panels. Each photovoltaic panel typically comprises a plurality of photovoltaic cells.

Similar to the first aspect the motor may be a brushless DC motor/synchronous permanent magnet machine. The converter for starting and operating the motor may comprise an inverter comprising a controllable B6 inverter bridge configured to provide a three-phase AC power drive output for driving the motor and the piston compressor pump. The converter may be adapted to adjust the speed of rotation of the motor so that it is essentially proportional to the repeatedly determined available amount of power from the photovoltaic module. Thus, if the repeatedly determined available amount of power decreases a certain percentage the speed of rotation of the motor may be decreased accordingly using the converter.

As it will be discussed in further details below the available amount of power from a photovoltaic module depends on the amount of incoming natural sun light which typically depends on the position of the sun relative to the photovoltaic module, clouds, dirt on the photovoltaic module etc.

The control unit of the power unit ensures that the power unit is operated, at a given P-V curve, at a voltage slightly above the the V_{MPP} voltage, i.e. at a voltage where the photovoltaic module is stable. At this stable working point the photovoltaic module is not overloaded, and the photovoltaic module is able to deliver close to maximum power. The optimal working point may be less than 15%, such as less than 12%, such as less than 10%, such as less than 8%, such as less than 6%, such as less than 5% above the V_{MPP} voltage.

The load increase increments applied to the photovoltaic module may be provided by increasing the rotational speed of the motor and the piston compressor pump. With respect to the load increase increments, the voltage change, in response to a load increase implement, may be a voltage decrease.

The load increase increments of step b) may be essentially equal in size. When the voltage change, in response to a load increase increment, exceeds a threshold voltage value, and the output voltage of photovoltaic module thereby becomes smaller than V_{MPP}, the load applied to the photovoltaic module is reduced so that the optimal working point is slightly above V_{MPP} as already disclosed (between V_{MPP} and V_{OC}).

The power unit according to the second aspect may further be configured for powering the motor at least partly from an external AC power source, such as an AC power grid and/or an AC genset. In case an external AC power source is available this power source may be connected to the power unit where it may be converted to DC using an AC/DC converter. An inverter, comprising a controllable B6 inverter bridge, may be configured to provide a three-phase AC power drive output for driving the motor and the piston compressor pump.

In a third aspect the present invention relates to a cooling device for cooling pharmaceuticals comprising a power unit according to the second aspect, and optionally comprising an ice bank for separate cooling purposes of the cooling device. The cooling device may thus further comprise an ice bank, i.e. a cooling reservoir, for separate cooling purposes of the cooling device. The ice bank may be used to cool the pharmaceuticals in the absence of sun light and/or an AC power source.

The photovoltaic modules applied in relation to the present invention may be rigid semiconductor photovoltaic modules, flexible foil-based photovoltaic modules or a combination thereof. The photovoltaic panels forming the photovoltaic module or modules may be electrically connected in series or in parallel depending on the desired terminal voltage of the photovoltaic module or modules. The motor may be a brushless DC motor/synchronous permanent magnet machine.

The method and the power unit both aim at operating the motor at a working point with maximum available power from the photovoltaic module as this allows that the motor may be operated at the highest possible rotational speed, and that excess cooling capabilities may be stored in an ice bank for later cooling purposes, such as cooling pharmaceuticals. The duration of such later cooling purposed may be several days.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

The present invention will now be described in further details with reference to the accompanying figures where
Fig. 1 shows a typical amount of available power from a photovoltaic system, and a typical amount of required power for operating a cooling compressor between 4 am and 4 pm where cooling is needed,
Fig. 2a shows a prior art system comprising a plurality of photovoltaic modules coupled to a refrigerator and a battery bank, and Fig. 2b shows a SDD system according to the present invention,
Fig. 3 shows an electrical block diaphragm of a SDD module,
Fig. 4 shows three typical P-V curves of a photovoltaic module,
Fig. 5 shows a typical P-V curves of a photovoltaic module,
Fig. 6 shows a flow chart of the MPPT control scheme, and
Fig. 7 shows a more detailed flow chart of the MPPT control scheme.

### DETAILED DESCRIPTION OF THE INVENTION

In general, the present invention relates to a method and a power unit for powering a motor directly from a photovoltaic module. The motor is adapted to drive a piston compressor pump of a cooling device, such as a portable cooling device. The direct powering of the motor from the photovoltaic module is advantageous in that for example costly battery banks can be completely omitted. It is moreover advantageous that the speed of rotation of the motor is adjusted in accordance with a repeatedly determined available amount of power using MPPT control as this, for example, significantly reduces the number of starts and stops of the motor whereby unnecessary wear is reduced. The present invention also facilitates that the motor and the piston compressor pump may, at all times, be operated to provide maximum cooling. The method and power unit may find use in relation to portable cooling devices for cooling for example pharmaceuticals at remote locations where traditional AC power grids are either unstable/unreliable or simply not available.

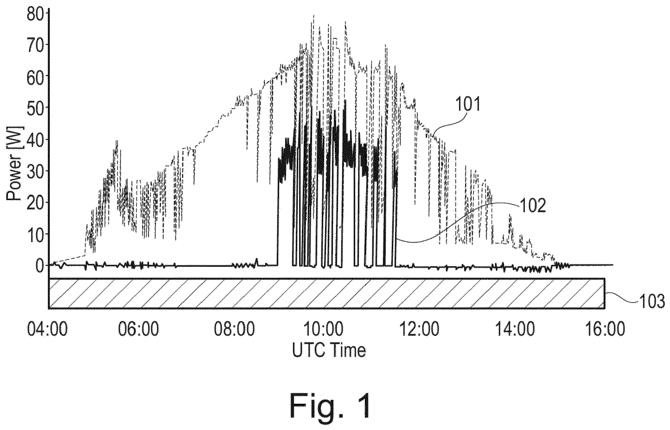

Referring now to Fig. 1 a typical amount of available power from a photovoltaic system (upper curve 101), and a typical amount of required power (lower curve 102) for operating a cooling compressor between 4 am and 4 pm is depicted. It is generally considered that sufficient power should be available for the cooling compressor between 4 am and 4 pm as indicated by the horizontal bar 103. The power fluctuations in the available power 101 from the photovoltaic system is due to clouds and dust that reduce the amount of incoming sun light. As seen in Fig. 1 the cooling compressor is periodically operated between 9 am and around 11:30 am although cooling is required between 4 am and 4 pm. A closer look at Fig. 1 reveals that the cooling compressor is only active when the available power from a photovoltaic system exceeds around 60 W. If the cooling compressor is active, at the available power from a photovoltaic system suddenly drops below 60 W the cooling compressor is temporarily stopped until the available power from the photovoltaic system again exceeds 60 W. Operating the motor and the cooling compressor in such a periodic manner is disadvantageous as it introduces unnecessary wear in the motor and the cooling compressor.

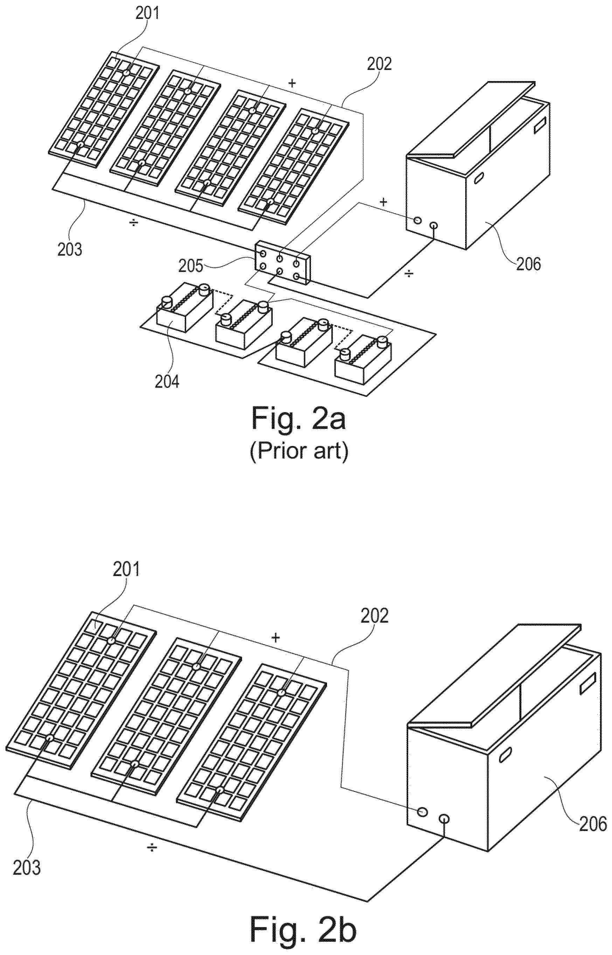

Turning now to Fig. 2a a prior art photovoltaic system is depicted. As seen in Fig. 2a the photovoltaic module comprises four photovoltaic panels 201 electrically coupled in parallel. The positive 202 and negative 203 voltage terminals are operatively connected to a power distribution device 205 which is electrically connected to four batteries 204 so that excess power from the four photovoltaic panels 201 can be stored for later use. The power distribution device 205 is also electrically connected to a load in the form of a refrigerator 206 which may be powered directly from the four photovoltaic panels 201, the four batteries 204 or a combination thereof. The prior art photovoltaic system depicted in Fig. 2a is disadvantageous for various reasons, such as the costs and the massive weight of the four batteries 204 as well as the availability, maintenance and environmental correct disposal of such batteries 204 at remote locations.

Referring now to Fig. 2b a photovoltaic system according to the present invention is depicted. The photovoltaic system depicted in Fig. 2b is significantly simpler compared to the prior art system depicted in Fig. 2a. As seen in Fig. 2b the refrigerator 206 is now exclusively powered from the photovoltaic panels 201 via the respective positive 202 and negative 203 voltage terminals. The power unit (not shown) of the present invention may from part of the refrigerator 206 or it may be arranged in connection with one of the photovoltaic panels 201. The photovoltaic system depicted in Fig. 2b is advantageous due to its simplicity and the fact that batteries can be completely omitted.

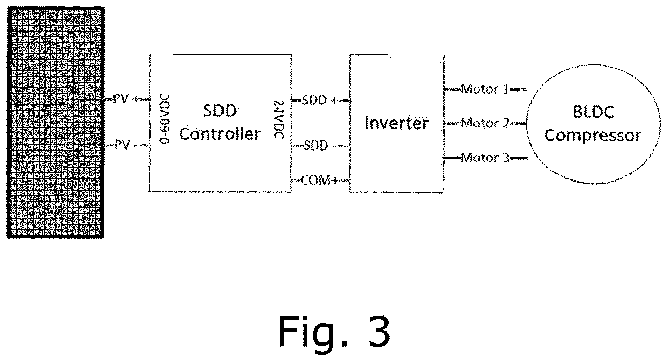

Fig. 3 shows an electrical block diaphragm of a solar direct drive (SSD) system comprising a photovoltaic module electrically connected (PV+ and PV-) to a SDD controller/ DC-DC converter which converts the variable voltage (0-600 VDC) from the photovoltaic panels to a constant DC voltage (24 VDC). The SDD system further involves a MPPT control scheme for determining an optimal working point. The optimal working point is derived from one or more P-V curves associated with the photovoltaic panels. The MMPT control scheme will be discussed in further details below. The SDD controller/DC-DC converter is connected to a DC-AC inverter which is connected to, and thus drives, the brushless DC motor of the compressor. A data communication link (COM+) is also provided between the SDD controller/DC-DC converter and the DC-AC inverter to set the motor/compressor speed and detect potential errors on the motor/compressor.

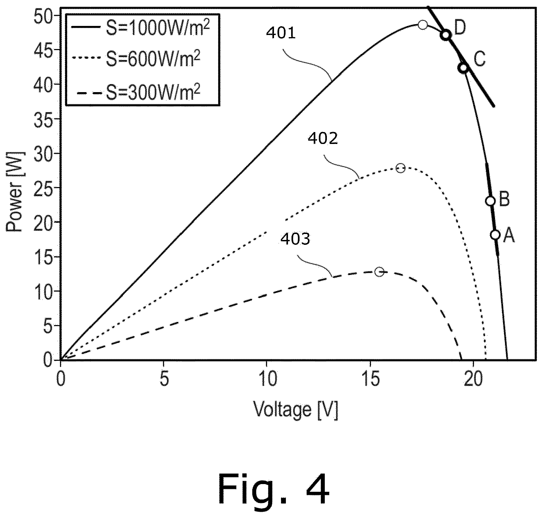

Turning now to Fig. 4 three P-V curves 401, 402, 403 of the same photovoltaic module are depicted. As indicated in Fig. 4 the P-V curves 401, 402, and 403 are associated with different incoming light intensities of 1000 W/m², 600 W/m² and 300 W/m², respectively. Each of the three P-V curves shows how the available amount of power can be determined from the terminal voltage of the photovoltaic module. The available amount of power may thus be determined from a measurement of the terminal voltage of the photovoltaic module. For example, at a terminal voltage of 15 VDC, the available amount of power will be around 46 W, 27 W and 13 W for the P-V curves 401 (1000 W/m²), 402 (600 W/m²) and 403 (300 W/m²), respectively. Thus, the available amount of power at a given terminal voltage strongly depends on the amount of incoming sun light.

The maximum available power also varies with the incoming sun light. As seen in Fig. 4 the P-V curve 401 (1000 W/m²) reveals a maximum power of around 50 W at a terminal voltage of around 17 VDC, and the P-V curve 402 (600 W/m²) reveals a maximum power of around 28 W at a terminal voltage of around 16 VDC, and the P-V curve 403 (300 W/m²) reveals a maximum power of around 13 W at a terminal voltage of around 15 VDC.

Preferably, the SDD module aims at operating the motor at a working point with maximum available power from the photovoltaic module, i.e. at or near the maximum power level of the P-V curves 401, 402, and 403, as this allows that the motor and the piston compressor pump can be operated at the highest possible rotational speed, and thus provide maximum cooling. Operating the motor and the piston compressor pump at maximum cooling is advantageous in that excess cooling may be stored in an ice bank for later cooling purposes. The duration of such later cooling purposed may be several days.

In order to operate at a working point with maximum available power (from the photovoltaic module) the value and sign of dv/dw may be monitored in a MPPT control scheme. As seen in Fig. 4 it may be advantageous to move from working point A to working point B as this increases the amount of available power. Moreover, it may be advantageous to move from working point B to working point C as this increases the amount of available power even further. An even further adjustment to working point D may also be advantageous. Thus, by constantly monitoring dv/dw in the MPPT control scheme it may be possible to operate at or near the maximum available power of the photovoltaic module and thus, at any time, provide maximum cooling. This is advantageous in that the number of starts and stops of the motor and the piston compressor pump connected thereto may be significantly reduced, and as a consequence, the life time of the motor and the piston compressor pump may be significantly increased due to less wear.

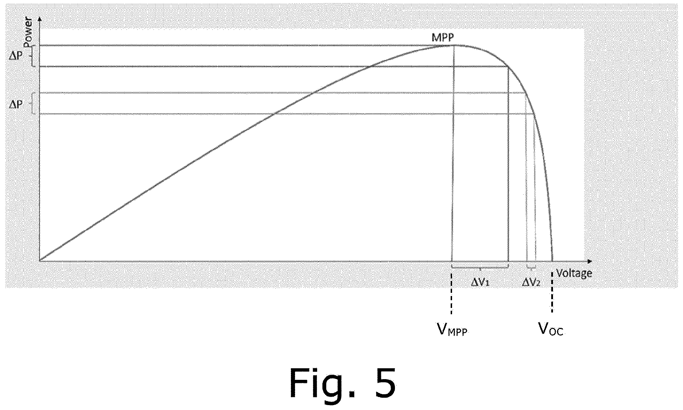

Fig. 5 shows a preferred implementation of the MPPT control scheme where the optimal working point is determined from at least one P-V curve having a maximum peak power point, P_{MPP}, at a voltage of V_{MPP}, and a maximum output voltage, V_{OC}. The maximum output voltage, V_{OC}, is reached when no load is applied to the photovoltaic module. As seen in Fig. 5 the maximum voltage, V_{OC}, is larger than V_{MPP}.

Starting from no load, i.e. from the point (V_{OC}, 0), the voltage decreases when the load is increased until the maximum power point (MPP) is reached. If the MPP is crossed the available power decreases and the photovoltaic module might collapse. Thus, when increasing the load applied to the photovoltaic module, the MPPT control scheme ensures that the MPP is not crossed. As a consequence, the MPPT control scheme thus ensures that the voltage is always higher than V_{MPP}. In terms of numbers, the optimal working point may be less than 15%, such as less than 12%, such as less than 10%, such as less than 8%, such as less than 6%, such as less than 5% above the V_{MPP} voltage.

The MPPT control scheme is adapted to detect changes in the photovoltaic voltage when the load is increased, such as increased in incremental steps. Load changes may be provided by various means, such as changing the rotational speed of the motor and the piston compressor pump. If the rotational speed is increased, the load on the photovoltaic module is increased as well, whereas if the rotational speed is decreased, the load on the photovoltaic module is also decreased. As depicted in Fig. 5, the same change in power (i.e. a same load increase increment ΔP₁ = ΔP₂) results in different voltage changes (ΔV₂ and ΔV₁) with ΔV₂ being significant smaller than ΔV₁. In order not to cross the MPP the MPPT control scheme sets a threshold for ΔV. When the threshold is reached or exceeded the load the photovoltaic module is reduced in order not to cross the MPP.

Thus, by exclusively monitoring voltage changes from photovoltaic module in response to applied load increase increments, ΔP, the MPPT control scheme is capable of determining an optimal working point in a P-V curve.

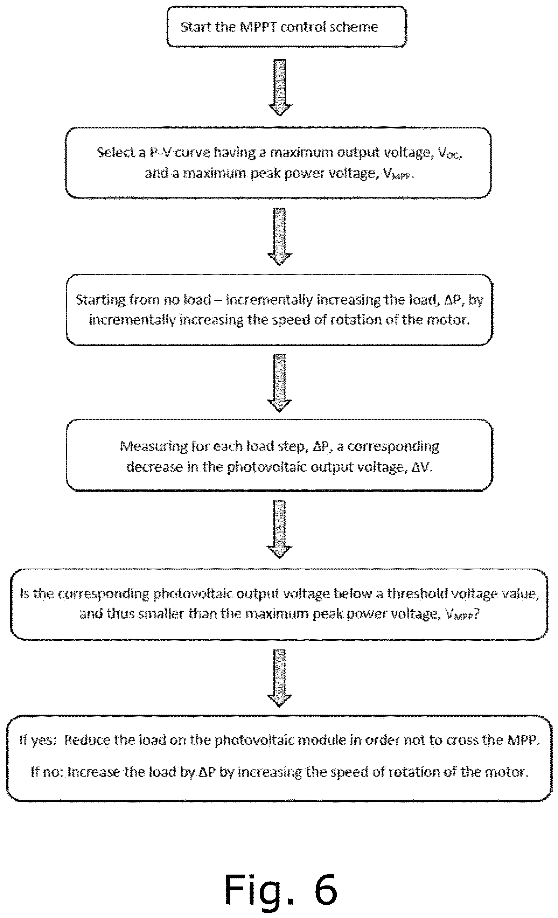

The MPPT control scheme is depicted in the flow chart of Fig. 6. Initially, a P-V curve having a maximum output voltage, V_{OC}, at no load, and a maximum peak power voltage, V_{MPP}, is selected. Starting from no load, i.e. at (V_{OC}, 0), the load on the photovoltaic module is increased in incremental steps, ΔP, by incrementally increasing the speed of rotation of the motor. For each load step, ΔP, a corresponding decrease in the photovoltaic output voltage, ΔV, is determined. When a given load step, ΔP, causes a corresponding photovoltaic output voltage to decrease below a threshold voltage value, and thus becomes smaller than the maximum peak power voltage, V_{MPP}, the load on the photovoltaic module is reduced in order not to cross the MPP.

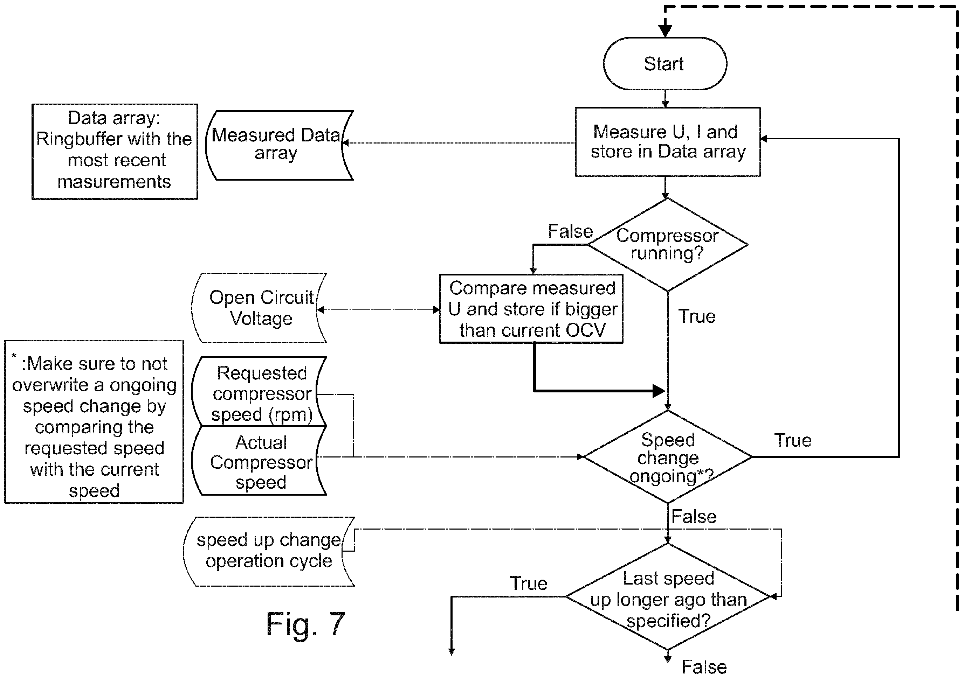

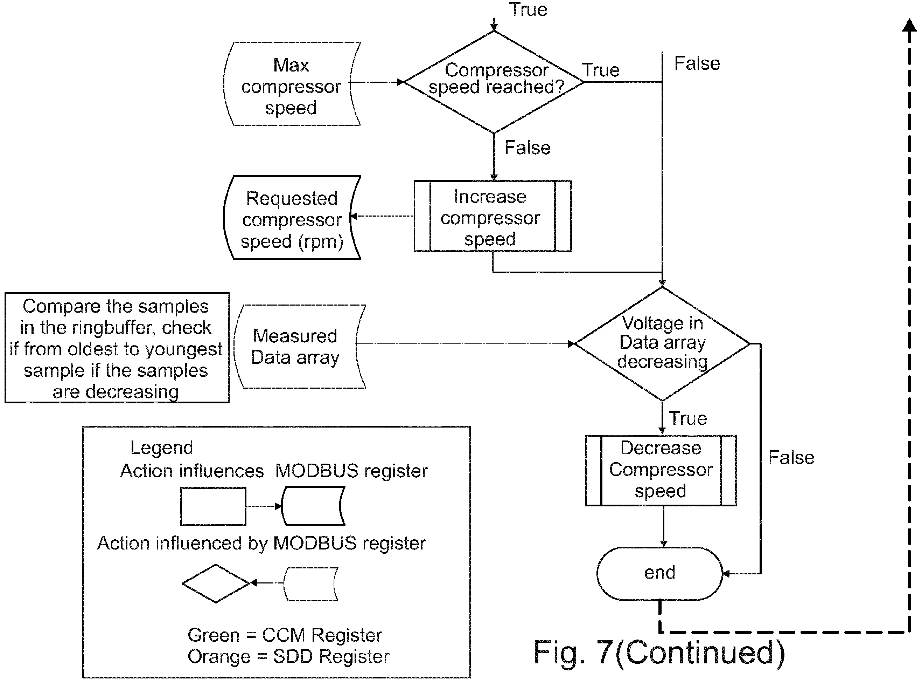

Referring now to Fig. 7 a more detailed flow chart is depicted. Starting from the voltage and current from the photovoltaic module are measured and stored. In case the compressor, and thus the motor is running, it is determining whether the motor/compressor is undergoing a speed change. If the motor/compressor is not running the controller measures and updates the OCV (Open Current Voltage). The controller thus compares the measured voltage with the stored OCV. If the measured voltage is higher than the stored OCV, the measured voltage value will be stored. This process leads step by step to the determination of the OCV without knowing the data of the collected cell. If the motor/compressor is undergoing a speed change the voltage and current from the photovoltaic module are measured and stored again. If the motor/compressor is not undergoing a speed change it is determined when the speed of rotation of the motor/compressor was increased the last time, and whether this speed increase occurred longer ago than specified. If not, the voltage will be measured, but the speed increase is blocked. If, on the other hand, the speed increase occurred longer ago than specified it is to be determined whether the maximum motor/compressor speed has been reached. If not, the motor/compressor speed is increased. Alternatively, the voltage is decreasing. In case of the latter the motor/compressor speed will be decreased.

Although the invention has been discussed in the foregoing with reference to exemplary embodiments of the invention, the invention is not restricted to these particular embodiments which can be varied in many ways without departing from the invention. The discussed exemplary embodiments shall therefore not be used to construe the appended claims strictly in accordance therewith. On the contrary, the embodiments are merely intended to explain the wording of the appended claims, without intent to limit the claims to these exemplary embodiments. The scope of protection of the invention shall therefore be construed in accordance with the appended claims only, wherein a possible ambiguity in the wording of the claims shall be resolved using these exemplary embodiments.

## Claims

1. A method for determining an optimal working point for a power unit adapted to power a motor directly from a photovoltaic module, wherein the motor is adapted to drive a piston compressor pump, the method comprising the steps of
a) providing associated data for voltage and power for the photovoltaic module in the form of at least one P-V curve comprising a maximum peak power point (V_{MPP}, P_{MPP}) and a maximum output voltage, V_{OC}, being larger that V_{MPP},
b) incrementally increasing the load applied to the photovoltaic module and monitor, for each incremental load increase, an associated voltage change,
c) repeating step b) until the voltage change, in response to a load increase increment, exceeds a threshold voltage value, and the output voltage of photovoltaic module thereby becomes smaller than V_{MPP},
d) reducing the load applied to the photovoltaic module and thus arrive at the optimal working point between V_{MPP} and V_{OC}, and
e) applying the optimal working point in the power unit.

2. A method according to claim 1, wherein the load increase increments applied to the photovoltaic module are provided by increasing the rotational speed of the motor and the piston compressor pump.

3. A method according to claim 1 or 2, wherein the voltage change, in response to a load increase increment, is a voltage decrease.

4. A method according to any of claims 1-3, wherein the load increase increments of step b) are essentially equal in size.

5. A method according to any of claims 1-4, wherein optimal working point is less than 15%, such as less than 12%, such as less than 10%, such as less than 8%, such as less than 6%, such as less than 5% above the V_{MPP} voltage.

6. A method according to any of claims 1-5, wherein the photovoltaic module comprises a plurality of photovoltaic panels.

7. A method according to any of claims 1-6, wherein the motor is a brushless DC motor/synchronous permanent magnet machine.

8. A power unit adapted to power a motor directly from a photovoltaic module, wherein the motor is adapted to drive a piston compressor pump, and wherein the power unit comprises a control unit adapted to
f) receive associated data for voltage and power for the photovoltaic module in the form of at least one P-V curve comprising a maximum peak power point (V_{MPP}, P_{MPP}) and a maximum output voltage, V_{OC}, being larger that V_{MPP},
g) incrementally increasing the load applied to the photovoltaic module and monitor, for each incremental load increase, an associated voltage change,
h) repeating step b) until the voltage change, in response to a load increase increment, exceeds a threshold voltage value, and the output voltage of photovoltaic module thereby becomes smaller than V_{MPP},
i) reducing the load applied to the photovoltaic module and thus arrive at the optimal working point between V_{MPP} and V_{OC}, and
j) applying the optimal working point in the power unit.

9. A power unit according to claim 8, wherein the load increase increments applied to the photovoltaic module are provided by increasing the rotational speed of the motor and the piston compressor pump.

10. A power unit according to claim 8 or 9, wherein the voltage change, in response to a load increase increment, is a voltage decrease.

11. A power unit according to any of claims 8-10, wherein the load increase increments of step b) are essentially equal in size.

12. A power unit according to any of claims 8-11, wherein optimal working point is less than 15%, such as less than 12%, such as less than 10%, such as less than 8%, such as less than 6%, such as less than 5% above the VMPP voltage.

13. A cooling device for cooling pharmaceuticals comprising a power unit according to any of claims 8-12, and optionally comprising an ice bank for separate cooling purposes of the cooling device.

14. A cooling device according claim 13, wherein the photovoltaic module comprises a plurality of photovoltaic panels.

15. A cooling device according to claim 13 or 14, wherein the motor is a brushless DC motor/synchronous permanent magnet machine.
